# EUROPÄISCHE PATENTSCHRIFT

(11) **EP 0 977 937 B1**
(45) Veröffentlichungstag und Bekanntmachung des Hinweises auf die Patenterteilung: **12.06.2002**
(21) Anmeldenummer: 98922680.8
(22) Anmeldetag: 09.04.1998
(51) Int. Cl.: F02B 37/18, F02B 37/22

(54) **BRENNKRAFTMASCHINE MIT ABGAS-TURBOLADER**
INTERNAL COMBUSTION ENGINE WITH AN EXHAUST GAS TURBOCHARGER
MOTEUR A COMBUSTION INTERNE A TURBOCOMPRESSEUR ENTRAINE PAR LES GAZ D'ECHAPPEMENT

(30) Priorität: 23.04.1997 DE 19717094
(43) Veröffentlichungstag der Anmeldung: 09.02.2000
(73) Patentinhaber: DaimlerChrysler AG, 70567 Stuttgart (DE)
(72) Erfinder: SCHMIDT, Erwin, D-73666 Baltmannsweiler (DE); SCHADE, Marco, CH-5304 Endingen (CH); SUMSER, Siegfried, D-70184 Stuttgart (DE)
(86) Internationale Anmeldenummer: EP9802104
(87) Internationale Veröffentlichungsnummer: WO9848156

(56) Entgegenhaltungen:
- DE-C- 4 232 400
- US-A- 4 211 081
- US-A- 5 119 633
- PATENT ABSTRACTS OF JAPAN vol. 010, no. 326 (M-532), 6. November 1986 & JP 61 132722 A (ISUZU MOTORS LTD), 20. Juni 1986
- LINNHOFF ET AL.: "Rechnerische Simulation der Injektorströmung am Turbinenbypass eines aufgeladenen Dieselmotors" MTZ MOTORTECHNISCHE ZEITSCHRIFT , Bd. 48, Nr. 10, 1987, Seiten 395-402, XP002075523 in der Anmeldung erwähnt

## Beschreibung

Die Erfindung betrifft eine Brennkraftmaschine mit einer Ansaugleitung, einer Abgasleitung und einem Abgas-Turbolader gemäß dem Oberbegriff des Anspruches 1.

Bei Brennkraftmaschinen, die als aufgeladene Brennkraftmaschinen mit einem Abgas-Turbolader ausgerüstet sind, ist es allgemein gebräuchlich, in der Abgasleitung ein Abblaseventil, üblicherweise auch als "Waste Gate" bezeichnet, anzuordnen. Dieses Abblaseventil wird bei bekannten Lösungen in Abhängigkeit von Betriebsparametern zur Ladedruckregelung benutzt, wobei als Parameter beispielsweise die angesaugte Luftmenge, die Drehzahl, der Ladedruck und/oder die Drosselklappenstellung der Brennkraftmaschine dienen.

Aus der DE-Z "Linnhoff/Peters/Schindler: Rechnerische Simulation der Injektorströmung am Trubinenbypass eines aufgeladenen Dieselmotors", MTZ Motortechnische Zeitschrift 1987/10, S. 395-402, ist es bereits bekannt, daß sich durch Freigabe des "Waste-Gates" der Druck von der Turbine absenken läßt, um so die Ausschiebearbeit und damit den Vollastverbrauch des Motors zu senken.

Die Zielrichtung solcher aus der Praxis bekannter Ladedruckregelungen ist beispielsweise, das Ansprechverhalten von über Abgas-Turbolader aufgeladenen Brennkraftmaschinen im Sinne des Vermeidens des sogenannten Turboloches zu verbessern, oder auch die Leistung der Maschine nach oben zu begrenzen.

Da die Turbine des Abgas-Turboladers in der Abgasleitung liegt, bildet sie quasi eine Drossel und wirkt im Abgasstrom als Stauelement. Über dieses wird im Motorbremsbetrieb in gewünschter Weise der Aufbau eines Abgasgegendruckes bewirkt und/oder unterstützt, wobei der maximal zulässige Abgasgegendruck die maximale Motorbremsleistung bestimmt und durch die jeweilige Belastbarkeit des Motors vorgegeben ist.

Die DE 42 32 400 C1 schlägt vor, die Aufstauwirkung der Turbine des Abgasturboladers im Motorbremsbetrieb zu nutzen, wobei durch einen verstellbaren Strömungsleitapparat der Turbine der Drosselquerschnitt der Turbine variierbar ist. Die Bremsleistung soll dadurch einstellbar sein, und auf eine separate Motorbremsvorrichtung soll verzichtet werden können.

Der Erfindung liegt die Aufgabe zugrunde, diesen Abgasgegendruck auf ein für den Bremsbetrieb noch zulässiges Maß zu beschränken, um Motorschäden zu vermeiden.

Dies wird im Rahmen der Erfindung durch die Merkmale des Anspruches 1 erreicht, der den Einsatz eines im Motorbremsbetrieb den Abgasgegendruck begrenzenden und einen Zugang zu einem die Turbine umgebenden Bypass öffnenden Ventiles vorsieht.

Das Ventil ist in Ausgestaltung der Erfindung in Schließrichtung federbelastet und zweckmäßigerweise über Stellmittel beaufschlagt, die einen Stellkolben umfassen, der im Motorbremsbetrieb in Gegenrichtung zur Feder mit Abgasgegendruck beaufschlagbar ist.

Hierbei ist es ferner zweckmäßig, die Stellmittel, zur Unterstützung der Feder, gleichwirkend zur Feder mit Ladedruck zu beaufschlagen, so daß sich auch verhältnismäßig hohe Abgasgegendrücke bei nicht zu hoher Federkraft beherrschen lassen und durch die Differenzdruckbindung zwischen Ladedruck und Abgasgegendruck auch diesbezüglich drehzahlabhängig eintretende Änderungen im Regelverhalten nutzen lassen.

Als besonders zweckmäßig erweist es sich, für den Motorbremsbetrieb einerseits und für den Verbrennungsbetrieb, also den Arbeitsbetrieb des Motors andererseits das gleiche Ventil als Abblaseventil zu verwenden, im einen Fall zur Begrenzung des Abgasgegendruckes, im anderen Fall zur Begrenzung des Ladedruckes, wozu es sich als zweckmäßig erweist, den Ladedruck für den Verbrennungsbetrieb als der Federkraft entgegenwirkenden Steuerdruck einzusetzen. Im Hinblick auf die Anpassung an die gegebene Federkraft einerseits und den verfügbaren Ladedruck andererseits kann es dabei zweckmäßig sein, den Ladedruck - in Abstimmung auf die Stellkraft der Feder - zu modulieren, insbesondere durch Zwischenschaltung eines Differenzdruckzylinders.

Die Drosselwirkung der Turbine im Motorbremsbetrieb kann im Rahmen der Erfindung durch Einsatz von Abgasturboladern beeinflußt werden, bei denen der turbinenseitige Durchlaßquerschnitt veränderlich und zumindest weitgehend absperrbar ist.

Dies ist bei Turbinen möglich, bei denen der das Turbinenlaufrad umgebende Strömungskanal einen auf den Strömungseintrittsquerschnitt des Laufrades mündenden ringdüsenförmigen Mündungsbereich und in diesem mindestens ein variables Leitgitter mit Leitschaufeln aufweist, über die der Durchflußquerschnitt des ringdüsenförmigen Mündungsbereiches einstellbar ist. Der Einsatz der Erfindung in Verbindung mit solchen Abgas-Turboladern, deren Durchflußquerschnitt veränderlich und zumindest weitgehend absperrbar ist, kann aus Sicherheitsgründen oder zur Verbesserung des Gesamtregelverhaltens zweckmäßig sein, zumal bei Brennkraftmaschinen mit derartigen Abgas-Turboladern der Aufbau des Abgasgegendruckes drehzahlabhängig schon unterhalb der Nenndrehzahl der Brennkraftmaschine eine Größenordnung erreichen kann, die zur Zerstörung der Brennkraftmaschine führen würde.

Insbesondere erweist sich der Einsatz der Erfindung auch bei Abgas-Turboladern als zweckmäßig, bei denen der Durchlaßquerschnitt im Mündungsbereich auf die Turbine durch Axialverschiebung eines Strömungsleitapparates veränderlich und zumindest weitgehend absperrbar ist, wobei der Strömungsleitapparat über seiner axialen Erstreckung neben Leitorganen, wie Schaufeln, Kanälen oder dgl. axial versetzt hierzu auch mehr oder weniger geschlossene Umfangsabschnitte aufweisen kann, die bei Überdeckung zum Mündungsbereich den Durchgangsquerschnitt zumindest weitgehend absperren. Gerade in Verbindung mit derartigen Ausgestaltungen von Abgas-Turboladern kann der Einsatz der Erfindung zweckmäßig sein, da schon geringfügige Änderungen des freien Durchlaßquerschnittes große Auswirkungen auf den jeweiligen Abgasgegendruck haben und da eine entsprechende Feinverstellung des Leitapparates nur schwer beherrschbar ist und großen Aufwand verursacht, insbesondere unter den in einer Abgasturbine gegebenen Extrembedingungen. Selbstverständlich ist die Erfindung auch einsetzbar.bei abgewandelten Lösungen mit axial verschiebbarem Leitapparat, beispielsweise bei solchen Lösungen, bei denen als Absperrelement eine zusätzliche, koaxial liegende Absperrhülse eingesetzt wird.

Die Erfindung wird im Folgenden anhand eines Ausführungsbeispieles näher erläutert, wobei
- Fig. 1: schematisiert und global eine Brennkraftmaschine mit zugeordnetem Turbolader zeigt, und
- Fig. 2: das in der Darstellung gemäß Fig. 1 in der Abgasleitung der Turbine vorgelagert angeordnete Abblaseventil mit entsprechender Stelleinrichtung und Steuerschaltung in vergrößerter Darstellung.

In den Figuren ist mit 1 die Brennkraftmaschine bezeichnet, die eine Ansaugleitung 2, eine Abgasleitung 3 und, stark schematisiert, einen Abgas-Turbolader 4 umfaßt, dessen Verdichter 5 in der Ansaugleitung 2 und dessen Turbine 6 in der Abgasleitung 3 liegt.

Der Turbolader 4, der hier stark vereinfacht gezeichnet ist, kann beispielsweise ein als Turbine 6 dienendes Laufrad aufweisen, das von einem Strömungskanal umgeben ist, dessen Übertrittsquerschnitt auf das Laufrad durch einen Leitapparat mit entsprechenden Verstell- und/oder Absperrelementen so weit veränderlich ist, daß ein Abströmen von Abgas in der Abgasleitung 3 über die Turbine 6 hinaus weitgehend verhindert ist. Dadurch läßt sich für den Bremsbetrieb der Brennkraftmaschine 1 ein Abgasrückstau erreichen, wobei über der Drehzahl der Brennkraftmaschine der sich in der Abgasleitung 3 aufstauende, mit p₃ bezeichnete Abgasgegendruck ansteigt und für die Brennkraftmaschine kritische Werte erreichen kann.

Um dies zu vermeiden, andererseits aber das Abgas im unteren Motordrehzahlbereich in der beschriebenen Weise stärker aufzustauen und die aus der Ladungswechselschleife gewonnene Bremsleistung zu steigern, ist in der Abgasleitung 3 ein Ventil 7 angeordnet, dem Stellmittel 8 zugeordnet sind und über das ein die Abgasleitung 3 im Bereich der Turbine 6 überbrückender Bypass 9 gesteuert werden kann.

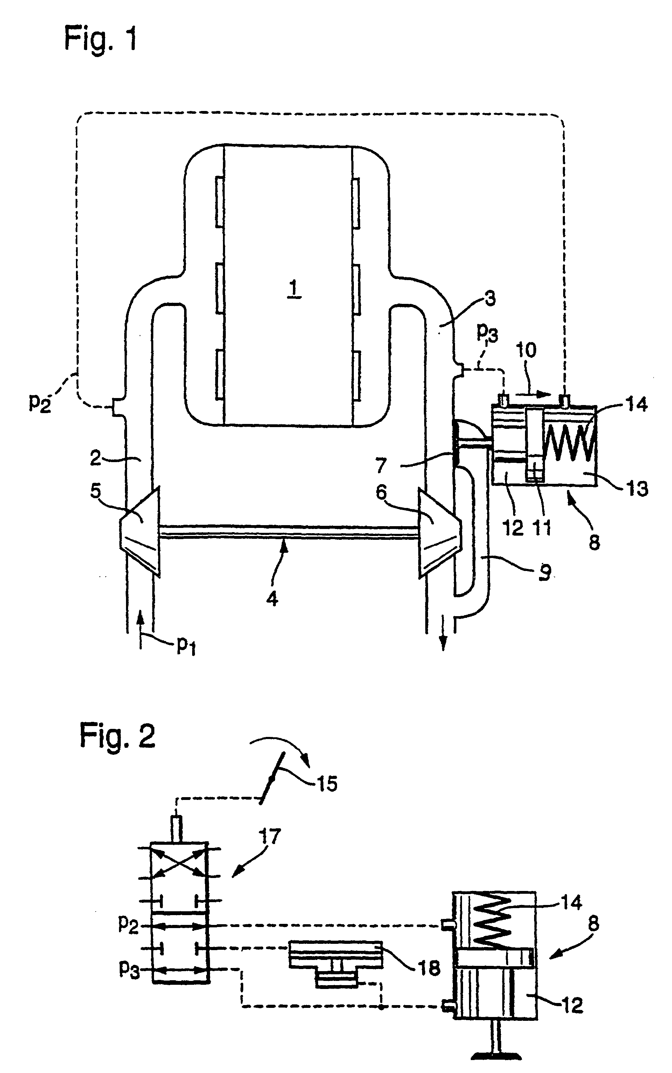

Die öffnungsrichtung des Ventiles ist mit 10 bezeichnet, und als Stellmittel 8 für das Ventil 7 ist ein Stellzylinder vorgesehen, der einen Kolben 11 umfaßt, durch den zwei Zylinderkammern 12 und 13 voneinander getrennt sind. Die Zylinderkammer 12 ist dem Ventil 7 zugewandt, in der gegenüberliegenden, ventilabgewandten Zylinderkammer 13 ist eine das Ventil in Schließrichtung belastende Feder 14 vorgesehen. Die Kammern 12 und 13 sind ferner mit Druckanschlüssen versehen, wobei in Fig. 1 die für den Bremsbetrieb der Brennkraftmaschine 1 vorgesehene Druckbeaufschlagung veranschaulicht ist, nämlich seitens der Kammer 12 der Anschluß an die Abgasleitung 3, und damit die Beaufschlagung mit Abgasgegendruck p₃, und seitens der Kammer 13 der Anschluß an die Ansaugleitung 2, und damit überlagert zur Belastung der Feder 14 die Beaufschlagung mit Ladedruck p₂.

Auf diese Weise wird mit zunehmendem Abgasgegendruck p₃ das Ventil 7 in öffnungsrichtung 10 mit steigender Drehzahl zunehmend beaufschlagt, wobei durch die Abstimmung der Wirkflächen, einschließlich der Fläche des Ventiltellers des Ventiles 7 und entsprechende Festlegung der Kraft der Feder 14 ein Druck festgelegt werden kann, bei dem das Ventil 7 öffnet und den Bypass 6 freigibt. Um möglichst große Bremsleistungen realisieren zu können, erfolgt die Festlegung dabei zweckmäßigerweise auf einen Druck p₃, der dem für den Bremsbetrieb der Brennkraftmaschine 1 noch zulässigen Abgasgegendruck entspricht.

Die üblicherweise notwendige und über ein im Abgastrakt vorgesehenes Abblaseventil realisierte Ladedruckbegrenzung kann - im Rahmen der erfindungsgemäßen Lösung zur Begrenzung der Bremsleistung über das Ventil 7 - bei entsprechend geänderter Ansteuerung der Stellmittel 8 ebenfalls über das Ventil 7 realisiert werden. Eine diesbezügliche Verschaltung zeigt Fig. 2, wobei Fig. 2 lediglich als ein schematisiertes Ausführungsbeispiel zu verstehen ist. Hierbei sind dem Stellmittel 8, für das gleiche Bezugszeichen wie in Fig. 1 verwendet sind, in der gezeigten Schaltstellung die Anschlüsse an die Ansaugleitung 2 und die Abgasleitung 3 mit den entsprechenden Drücken p₂ und p₃ wie in Fig. 1 zugeordnet. Eine Umschaltung aus dieser gezeigten Darstellung in eine dem Verbrennungsbetrieb der Brennkraftmaschine 1 entsprechende, den Ladedruck begrenzende Schaltstellung kann über das gezeigte 6/2-Wegeventil erreicht werden, wobei die Umschaltung über das symbolisch dargestellte Leistungsstellglied der Brennkraftmaschine, hier ein Gaspedal 15, oder auch in Abhängigkeit von der Betätigung des Bremspedales, oder drehzahlabhängig vorgenommen werden kann. Bei Beaufschlagung des Pedales 15 in Richtung zunehmender Leistung - Pfeil 16 - wird die Umstellung des mit 17 bezeichneten 6/2-Wegeventiles ausgelöst. In der umgeschalteten, zweiten Schaltstellung ist dann der Ladedruck p₂, der von der Ansaugleitung 2 abgezweigt wird, auf die Kammer 12 geschaltet, während der Abgasgegendruck p₃, abgezweigt von der Abgasleitung 3 ausgeblendet ist.

Im Rahmen der Erfindung kann es sich als zweckmäßig erweisen, zur Abstimmung auf die Federkraft 14 und in Berücksichtigung der verhältnismäßig großen, zwischen den Drücken p₂ und p₃ gegebenen Druckdifferenz eine Abstimmung zwischen dem Druck p₂ und der Kraft der Feder 14 über ein Differenzdruckventil 18 vorzunehmen, das in den Steuerweg zwischen dem Wegeventil 17 und dem Anschluß an die Zylinderkammer 12 in der zweiten Schaltstellung des Wegeventils 17, wie in Fig. 2 gezeigt, eingeschaltet ist.

Durch die erfindungsgemäße Lösung ist somit ein sehr einfacher Weg aufgezeigt, mit sehr geringem Zusatzaufwand sowohl den Abgasgegendruck p₃ wie auch den Ladedruck p₂ zu begrenzen.

Im Rahmen der Erfindung ist es ferner, was hier nicht weiter dargestellt ist, möglich, das Abblaseventil 7 sowohl im Hinblick auf den Ladedruck wie auch im Hinblick auf den Abgasgegendruck bezüglich seines Ventilhubes kennfeldgesteuert zu verstellen, wobei über das Kennfeld im Motorsteuergerät zu jeder Motordrehzahl sowohl ein entsprechender Ladedruck p₂ wie auch ein entsprechender Abgasgegendruck p₃ vorgegeben werden können, und zwar unter Berücksichtigung des jeweiligen Betriebes der Brennkraftmaschine, das heißt deren Betrieb im Verbrennungsbetrieb oder im Bremsbetrieb. Hierbei wird der Abgasgegendruck p₃ bzw. der Ladedruck p₂, der in der Abgasleitung 3 bzw. in der Ansaugleitung 2 herrscht, mit dem vorgegebenen Sollwert verglichen, und es wird das Ventil über einen zugeordneten Stellmotor entsprechend diesem Ist-Sollwertvergleich verstellt.

## Patentansprüche

1. Brennkraftmaschine mit einer Ansaugleitung, einer Abgasleitung und einem Abgas-Turbolader, dessen Verdichter in der Ansaugleitung und dessen Turbine, im Motorbremsbetrieb als den Abgasgegendruck anhebende Drossel wirkend, in der Abgasleitung liegt, die in ihrem auf die Turbine zulaufenden Abschnitt mit einem über Stellmittel beaufschlagbaren Ventil versehen ist, über das in Abhängigkeit von Betriebsparametern des Systems Brennkraftmaschine/Abgas-Turbolader ein die Turbine umgehender Bypass zu öffnen ist,
**dadurch gekennzeichnet, daß** das Ventil (7) im Bremsbetrieb der Brennkraftmaschine (1) zur Begrenzung des Abgasgegendruckes (p₃) zu öffnen ist.

2. Brennkraftmaschine nach Anspruch 1,
**dadurch gekennzeichnet, daß** das Ventil (7) in Schließrichtung federbelastet ist.

3. Brennkraftmaschine nach Anspruch 1 oder 2,
**dadurch gekennzeichnet, daß** dem Ventil (7) Stellmittel (8) zugeordnet sind, die einen Stellkolben (11) umfassen, der im Bremsbetrieb in Gegenrichtung zur Feder (14) mit Abgasgegendruck (p₃) beaufschlagbar ist.

4. Brennkraftmaschine nach Anspruch 3,
**dadurch gekennzeichnet, daß** der Stellkolben (11) im Bremsbetrieb gleichgerichtet zur Kraft der Feder (14) mit Ladedruck (p₂) beaufschlagbar ist.

5. Brennkraftmaschine nach einem der vorhergehenden Ansprüche,
**dadurch gekennzeichnet, daß** das Ventil (7) im Verbrennungsbetrieb der Brennkraftmaschine (1) als Abblaseventil zur Begrenzung des Ladedruckes zusätzlich eingesetzt ist.

6. Brennkraftmaschine nach Anspruch 5,
**dadurch gekennzeichnet, daß** das Ventil (7) im Verbrennungsbetrieb der Brennkraftmaschine (1) entgegen der Federkraft (14) in öffnungsrichtung (10) mit Ladedruck (p₂) beaufschlagbar ist.

7. Brennkraftmaschine nach Anspruch 6,
**dadurch gekennzeichnet, daß** der Ladedruck (p₂) zur Beaufschlagung des Stellkolbens (11) in Öffnungsrichtung (10) des Ventiles in Abstimmung auf die Stellkraft der Feder (14) in seiner Druckhöhe modulierbar ist.

8. Brennkraftmaschine nach Anspruch 7,
**dadurch gekennzeichnet, daß** in der Zuleitung zu der im Verbrennungsbetrieb ladeluftseitig beaufschlagten Kammer (12) ein Druckmodulator (18) vorgesehen ist.

9. Brennkraftmaschine nach einem der vorhergehenden Ansprüche,
**dadurch gekennzeichnet, daß** der Abgas-Turbolader mit zumindest weitgehend absperrbarem, turbinenseitigem Durchlaßquerschnitt versehen ist.

## Claims

1. An internal combustion engine with an intake line, an exhaust line and a turbocharger, its compressor being located in the intake line and its turbine, which acts as the throttle lifting the exhaust backpressure in engine braking mode, being located in the exhaust line, the section of which running towards the turbine is provided with a valve which can be actuated by actuating means and which is used to open a bypass around the turbine in dependence on operating parameters of the internal combustion engine/turbocharger system,
**characterised in that**
the valve (7) is opened in braking mode of the internal combustion engine (1) in order to limit backpressure (p₃).

2. An internal combustion engine in accordance with claim 1,
**characterised in that**
the valve (7) is spring-loaded in the direction of closure.

3. An internal combustion engine in accordance with claim 1 or 2,
**characterised in that**
the valve (7) has actuating means (8) comprising an actuating piston (11) to which exhaust backpressure (p₃) is applied in braking mode in the opposite direction to the spring (14).

4. An internal combustion engine in accordance claim 3,
**characterised in that**
boost pressure (p₂) can be applied to the actuating piston (11) in braking mode in the same direction as the force of the spring (14).

5. An internal combustion engine in accordance with one of the preceding claims,
**characterised in that**
when the internal combustion engine (1) is in combustion mode the valve (7) can also be used as a blow-off valve to limit boost pressure.

6. An internal combustion engine in accordance with claim 5,
**characterised in that**
when the internal combustion engine (1) is in combustion mode boost pressure (p₂) can be applied to the valve (7) against the spring force (14) in the direction of opening (10).

7. An internal combustion engine in accordance with claim 6,
**characterised in that**
the level of boost pressure (p₂) to be applied to the actuating piston (11) in the direction of opening (10) of the valve (7) to match the actuating force of the spring (14) can be modulated.

8. An internal combustion engine in accordance with claim 7,
**characterised in that**
a pressure modulator (18) is provided in the feed line to the chamber (12) which receives pressure on the charge-air side in combustion mode.

9. An internal combustion engine in accordance with one of the preceding claims,
**characterised in that**
the turbocharger is provided with an opening cross-section on the turbine side which can largely be blocked.

## Revendications

1. Moteur à combustion interne comportant une tubulure d'aspiration, une conduite à gaz d'échappement et un turbocompresseur à gaz d'échappement dont le compresseur se trouve dans la tubulure d'aspiration et dont la turbine, faisant office d'étranglement augmentant la contre-pression des gaz d'échappement pendant le fonctionnement en frein moteur, se trouve dans la conduite à gaz d'échappement qui est pourvue, sur son tronçon s'étendant vers la turbine, d'une soupape qui est susceptible d'être attaquée via des organes de positionnement et via laquelle s'ouvre un by-pass contournant la turbine en fonction des paramètres de fonctionnement du système moteur-à-combustion-interne/turbocompresseur-à-gaz-d'échappement, **caractérisé en ce que** la soupape (7) doit être ouverte pendant le fonctionnement en frein moteur du moteur à combustion interne (1) pour limiter la contre-pression des gaz d'échappement (p₃).

2. Moteur à combustion interne selon la revendication 1, **caractérisé en ce que** la soupape (7) est sollicitée par un ressort en direction de fermeture.

3. Moteur à combustion interne selon l'une ou l'autre des revendications 1 et 2, **caractérisé en ce qu'**à la soupape (7) sont associés des organes de positionnement (8) qui comprennent un piston de positionnement (11) qui est susceptible d'être attaqué par la contre-pression des gaz d'échappement (p₃) en sens opposé au ressort (14) pendant le fonctionnement en frein moteur.

4. Moteur à combustion interne selon la revendication 3, **caractérisé en ce que** le piston de positionnement (11) est susceptible d'être sollicité par la pression de chargement (p₂) dans le même sens que la force du ressort (14) pendant le fonctionnement en frein moteur.

5. Moteur à combustion interne selon l'une quelconque des revendications précédentes, **caractérisé en ce que** la soupape (7) est utilisée en supplément pendant le fonctionnement en combustion du moteur à combustion interne (1) à titre de soupape de décharge pour limiter la pression de chargement.

6. Moteur à combustion interne selon la revendication 5, **caractérisé en ce que** la soupape (7) est susceptible d'être attaquée par la pression de chargement (p₂) en sens opposé à la force du ressort (14) en direction d'ouverture (10) pendant le fonctionnement en combustion du moteur à combustion interne (1).

7. Moteur à combustion interne selon la revendication 6, **caractérisé en ce que** la pression de chargement (p₂) peut être modulée vis-à-vis de son niveau de pression pour solliciter le piston de positionnement (11) en direction d'ouverture (10) de la soupape, en adaptation à la force de positionnement du ressort (14).

8. Moteur à combustion interne selon la revendication 7, **caractérisé en ce qu'**il est prévu un modulateur de pression (18) dans la conduite menant à la chambre (12) alimentée en air de chargement pendant le fonctionnement en combustion.

9. Moteur à combustion interne selon l'une quelconque des revendications précédentes, **caractérisé en ce que** le turbocompresseur à gaz d'échappement est pourvu d'au moins une section de passage largement obturable du côté turbine.
